# EUROPEAN PATENT APPLICATION

(11) **EP 2 065 577 A1**
(43) Date of publication of application: **03.06.2009**
(21) Application number: 07807310.3
(22) Date of filing: 14.09.2007
(51) Int. Cl.: F01N 3/08, B01D 53/56, B01D 53/74, B01D 53/86, B01D 53/94, F01N 3/02, F01N 3/24, F01N 3/28, F02D 23/02, F02D 41/04, F02D 41/38, F02D 45/00

(54) **ENGINE EXHAUST GAS PURIFICATION APPARATUS**

(30) Priority: 21.09.2006 JP 2006255634
(71) Applicant: Hino Motors, Ltd., Hino-shi, Tokyo 191-8660 (JP)
(72) Inventor: HOSOYA, Mitsuru, Tokyo 191-8660 (JP); KAWADA, Yoshihiro, Tokyo 191-8660 (JP)
(74) Representative: Altenburg, Udo
(86) International application number: PCT/JP2007/067903
(87) International publication number: WO 2008/035623

(57) **Abstract**

There is provided an exhaust gas purification apparatus for an engine capable of effectively removing NOx in exhaust gas even when the temperature of exhaust gas is relatively low. The exhaust gas purification apparatus includes a selective reduction catalyst 21 provided in an exhaust pipe 16, a liquid injection nozzle 23 provided on the upstream side of the selective reduction catalyst 21, a liquid injecting means 30 capable of injecting a urea-based liquid 32 via the liquid injection nozzle, a controller 44, and a mixer 26. The apparatus further includes an ammonia purification catalyst 54 provided on the downstream side of the selective reduction catalyst 21, a diesel particulate filter 51 provided on the upstream side of the nozzle 23, an oxidation catalyst 53 provided on the upstream side of the diesel particulate filter 51, and a temperature sensor 43 for detecting the temperature of the selective reduction catalyst 21. A fuel injection device is configured so as to be capable of injecting fuel into a cylinder after the top dead center of piston, and when the temperature sensor detects that the selective reduction catalyst 21 has a temperature not higher than a predetermined temperature, the controller controls the fuel injection device so that fuel is injected into the cylinder after the top dead center of piston.

## Description

### TECHNICAL FIELD

The present invention relates to an exhaust gas purification apparatus for an engine, which removes nitrogen oxides contained in exhaust gas of a diesel engine to purify the exhaust gas.

### BACKGROUND ART

Conventionally, as an exhaust gas purification apparatus for reducing nitrogen oxides (hereinafter abbreviated as NOx) contained in exhaust gas of a diesel engine, there has been known an exhaust gas purification apparatus for a diesel engine, in which a selective reduction catalyst is provided midway in an exhaust passage of the diesel engine, and a liquid injection nozzle capable of injecting a urea-based liquid toward the selective reduction catalyst is provided in an exhaust pipe on the exhaust gas upstream side of the selective reduction catalyst. In this exhaust gas purification apparatus for a diesel engine, the urea-based liquid injected from the liquid injection nozzle is heated by the heat of exhaust gas and is hydrolyzed, by which ammonia is yielded. This ammonia functions as a reducing agent for reducing NOx in exhaust gas by using the selective reduction catalyst so that the quantity of NOx discharged to the atmosphere can be decreased. To uniformize the urea-based liquid reaching the selective reduction catalyst and to reduce NOx emission, a proposal has been made that a mixer configured so that the liquid injected from the liquid injection nozzle can be mixed with exhaust gas is provided in an exhaust pipe between the liquid injection nozzle and the selective reduction catalyst (for example, refer to Patent Document 1)
Patent Document 1: Japanese Unexamined Patent Application Publication No. 2003-232218 (Clams for the Patent, Figure 1)

### DISCLOSURE OF THE INVENTION

### PROBLEMS TO BE SOLVED BY THE INVENTION

However, ammonia yielded by the hydrolysis of urea-based liquid functions as a reducing agent only when the temperature of exhaust gas is relatively high. When the temperature of exhaust gas is relatively low, ammonia does not function as a reducing agent. For this reason, in the exhaust gas purification apparatus using the selective reduction catalyst in the exhaust pipe, there remains an unsolved problem in that NOx in exhaust gas cannot be removed effectively when the temperature of exhaust gas is relatively low.
An object of the present invention is to provide an exhaust gas purification apparatus for an engine capable of effectively removing NOx in exhaust gas even when the temperature of exhaust gas is relatively low.

### Means for Solving the Problems

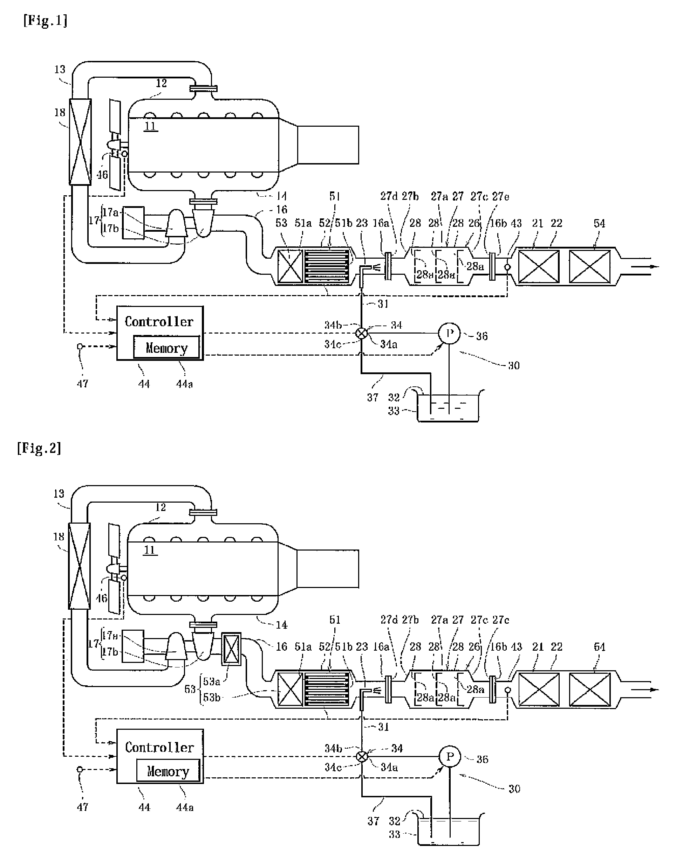

The invention set forth in claim 1 is an improvement in an exhaust gas purification apparatus including, as shown in Figure 1, a selective reduction catalyst 21 provided in an exhaust pipe 16 of a diesel engine 11 driven by burning a fuel, which is injected from a fuel injection device, in a cylinder; a liquid injection nozzle 23 provided in the exhaust pipe 16 on the exhaust gas upstream side of the selective reduction catalyst 21; a liquid injecting means 30 capable of injecting a urea-based liquid 32 toward the selective reduction catalyst 21 via the liquid injection nozzle 23; a controller 44 for controlling the liquid injecting means 30; and a mixer 26 that is provided in the exhaust pipe 16 between the liquid injection nozzle 23 and the selective reduction catalyst 21 and is configured so that the liquid 32 injected from the liquid injection nozzle 23 is mixed with exhaust gas.

The characteristic configuration of the above-described exhaust gas purification apparatus is that the apparatus further includes an ammonia purification catalyst 54 provided in the exhaust pipe 16 on the exhaust gas downstream side of the selective reduction catalyst 21; a diesel particulate filter 51 provided in the exhaust pipe 16 on the exhaust gas upstream side of the liquid injection nozzle 23; an oxidation catalyst 53 provided in the exhaust pipe 16 on the exhaust gas upstream side of the diesel particulate filter 51; and a temperature sensor 43 for detecting the temperature of the selective reduction catalyst 21 and sending the detected temperature to the controller 44, the fuel injection device is configured so as to be capable of injecting the fuel into the cylinder after the top dead center of piston, and when the temperature sensor 43 detects that the selective reduction catalyst 21 has a temperature not higher than 170°C, the controller 44 controls the fuel injection device so that the fuel is injected into the cylinder after the top dead center of piston.

In the exhaust gas purification apparatus for an engine described in claim 1, when the urea-based liquid 32 is injected from the liquid injection nozzle 23, the liquid 32 flows into the mixer 26, being sufficiently mixed with exhaust gas, and reaches the selective reduction catalyst 21 uniformly. In the selective reduction catalyst 21, the urea-based liquid 32 is heated by exhaust gas and is hydrolyzed, and ammonia yielded by the hydrolysis reduces NO and NO₂, by which the emission of NOx is reduced. The ammonia purification catalyst 54 oxidizes ammonia passing through the selective reduction catalyst 21 without being used as a reducing agent, by which the ammonia is converted to harmless N₂ and H₂O so that the ammonia is effectively prevented from being discharged to the atmosphere. Also, the particulate filter 51 captures particulates in the exhaust gas of the diesel engine 11, so that the particulates can be effectively prevented from being discharged to the outside.

The invention set forth in claim 2 is **characterized in that**, in the invention set forth in claim 1, the fuel injection device is configured so as to be capable of injecting the fuel into a cylinder after the top dead center of piston; the temperature sensor 43 is provided at the inlet of the selective reduction catalyst 21 and is configured so as to be capable of measuring the temperature of exhaust gas flowing into the selective reduction catalyst 21; and when the temperature sensor 43 detects a temperature not higher than a predetermined temperature, the controller 44 controls the fuel injection device so that the fuel is injected into the cylinder after the top dead center of piston.

In the exhaust gas purification apparatus for an engine described in claim 2, when the fuel is injected into the cylinder after the top dead center of piston by the fuel injection device, the fuel burns in the exhaust pipe 16, or undergoes oxidation reaction in the oxidation catalyst 53 provided on the upstream side of the particulate filter 51 to remarkably raise the temperature of exhaust gas, by which the temperature of the selective reduction catalyst 21 on the downstream side of the particulate filter 51 is increased rapidly. For this purpose, when the temperature sensor 43 detects that the selective reduction catalyst 21 has a temperature not higher than the predetermined temperature at which the urea-based liquid does not hydrolyze and moreover the activity in the selective reduction catalyst 21 decreases, the controller 44 controls the fuel injection device so that the fuel is injected into the cylinder after the top dead center of piston. Thereby, the temperature of the selective reduction catalyst 21 is increased rapidly, and therefore NOx in exhaust gas can be removed effectively.

Also, if the quantity of particulates captured by the particulate filter 51 increases, the resistance of exhaust gas passing through the particulate filter 51 increases. In this case, the fuel is injected into the cylinder after the top dead center of piston by the fuel injection device, and the fuel is burned in the particulate filter 51 together with the particulates, by which the particulate filter 51 can be regenerated.

The invention set forth in claim 3 is **characterized in that**, as shown in Figure 2, in the invention set forth in claim 2, a turbocharger 17 is provided on the engine 11, and the oxidation catalyst 53 consists of a first oxidation catalyst 53a provided in the exhaust pipe 16 just in rear of the turbocharger 17 and a second oxidation catalyst 53b provided in the exhaust pipe 16 just in front of the diesel particulate filter 51.
In the exhaust gas purification apparatus for an engine described in claim 3, the temperature of exhaust gas immediately after passing through the turbocharger 17 rises. Therefore, in the first oxidation catalyst 53a provided in the exhaust pipe 16 just in rear of the turbocharger 17, some of the fuel injected after the top dead center of piston can be burned surely to raise the temperature of exhaust gas. By burning the remaining fuel in the second oxidation catalyst 53b, the temperature of exhaust gas can be raised stepwise to rapidly increase the temperature of the selective reduction catalyst 21.

The invention set forth in claim 4 is **characterized in that**, in the invention set forth in claim 2 or 3, the fuel injection device is configured so as to be capable of accomplishing both of after injection for injecting the fuel when the crank angle is in the range of 30 to 50 degrees after the top dead center of piston and post injection for injecting the fuel when the crank angle is in the range of 90 to 130 degrees after the top dead center of piston; and when the temperature sensor 43 detects that the selective reduction catalyst 21 has a temperature not higher than the predetermined temperature, the controller 44 controls the fuel injection device so that both of the after injection and the post injection are accomplished.
In the exhaust gas purification apparatus for an engine described in claim 4, the after injection can increase hydrocarbon in exhaust gas and burn the hydrocarbon to raise the temperature of exhaust gas flowing out of the engine 11 to the exhaust pipe 16. Also, the post injection can cause the hydrocarbon increased in exhaust gas to undergo oxidation reaction in the oxidation catalyst 53 provided on the upstream side of the particulate filter 51 to further raise the temperature of exhaust gas, by which the temperature of the selective reduction catalyst 21 can be increased rapidly.

### EFFECT OF THE INVENTION

In the exhaust gas purification apparatus for an engine in accordance with the present invention, since the liquid injection nozzle, the mixer, and the selective reduction catalyst are provided, when the urea-based liquid is injected from the injection nozzle, the urea-based liquid flows into the mixer, being mixed with exhaust gas, and reaches the selective reduction catalyst. In the selective reduction catalyst, the urea-based liquid is hydrolyzed, and ammonia yielded by the hydrolysis reduces NO and NO₂, by which the emission of NOx is reduced. The ammonia purification catalyst provided in the exhaust pipe on the downstream side of the selective reduction catalyst oxidizes ammonia passing through the selective reduction catalyst without being used as a reducing agent, by which the ammonia is converted to harmless N₂ and H₂O so that the ammonia is effectively prevented from being discharged to the atmosphere.

On the other hand, when the fuel is injected into the cylinder after the top dead center of piston by the fuel injection device, the fuel burns in the exhaust pipe, or undergoes oxidation reaction in the oxidation catalyst provided on the upstream side of the particulate filter to remarkably raise the temperature of exhaust gas, by which the temperature of the selective reduction catalyst on the downstream side of the particulate filter is increased rapidly. For this purpose, when the temperature sensor detects that the selective reduction catalyst has a temperature at which the urea-based liquid does not hydrolyze, the controller controls the fuel injection device so that the fuel is injected into the cylinder after the top dead center of piston. Thereby, the temperature of the selective reduction catalyst is increased rapidly, and therefore NOx in exhaust gas can be removed effectively.

Also, since the diesel particulate filter is provided in the exhaust pipe on the exhaust gas upstream side of the liquid injection nozzle, the particulate filter captures particulates in exhaust gas of the diesel engine to effectively prevent the particulates from being discharged to the outside. If the quantity of captured particulates increases, the resistance of exhaust gas passing through the particulate filter increases. However, by injecting the fuel into the cylinder after the top dead center of piston and by burning the fuel, the particulate filter can be regenerated.

### BRIEF DESCRIPTION OF THE DRAWINGS

Figure 1 is a general view showing a configuration of an exhaust gas purification apparatus in accordance with an embodiment of the present invention; and
Figure 2 is a general view showing a configuration of an exhaust gas purification apparatus corresponding to the apparatus shown in Figure 1, which is provided with first and second oxidation catalysts.

### EXPLANATIONS OF LETTERS OR NUMERALS

- 11: diesel engine
- 16: exhaust pipe
- 17: turbocharger
- 21: selective reduction catalyst
- 23: liquid injection nozzle
- 26: mixer
- 30: liquid injecting means
- 32: urea-based liquid
- 43: temperature sensor
- 44: controller
- 51: diesel particulate filter
- 53: oxidation catalyst
- 53a: first oxidation catalyst
- 53b: second oxidation catalyst
- 54: ammonia purification catalyst

### BEST MODE FOR CARRYING OUT THE INVENTION

A best mode for carrying out the invention will now be described with reference to the accompanying drawings.
As shown in Figure 1, the intake port of a diesel engine 11 is connected with an intake pipe 13 via an intake manifold 12, and the exhaust port thereof is connected with an exhaust pipe 16 via an exhaust manifold 14. The intake pipe 13 is provided with a compressor 17a of a turbocharger 17 and an inter-cooler 18 for cooling intake air compressed by the turbocharger 17, and the exhaust pipe 16 is provided with a turbine 17b of the turbocharger 17. Although not shown, the rotary vane of the compressor 17a and the rotary vane of the turbine 17b are connected to each other by a shaft. The configuration is made such that the compressor 17a is rotated via the turbine 17b and the shaft by the energy of exhaust gas discharged from the engine 11, by which intake air in the intake pipe 13 is compressed by the rotation of the compressor 17a.

In the middle of the exhaust pipe 16, a selective reduction catalyst 21 is provided. The catalyst 21 is accommodated in a cylindrical first converter 22 formed by enlarging the diameter of the exhaust pipe 16. In this embodiment, there is shown a case where a copper zeolite catalyst, which reduces NOx in exhaust gas flowing into the exhaust pipe 16 at a relatively low temperature of 200 to 300°C, is used as the catalyst 21. However, a catalyst consisting of titanium oxide, vanadium oxide, or tungsten oxide may also be used. In the exhaust pipe 16 on the exhaust gas upstream side of the catalyst 21, that is, at the inlet of the catalyst 21, a liquid injection nozzle 23 capable of injecting a urea-based liquid 32 is provided so as to be directed toward the catalyst 21, and in the exhaust pipe 16 between the liquid injection nozzle 23 and the selective reduction catalyst 21, a mixer 26 configured so as to be capable of mixing the urea-based liquid 32 injected from the liquid injection nozzle 23 with exhaust gas is provided.

The mixer 26 of this embodiment includes a mixer body 27 having a cylinder part 27a through which exhaust gas passes in the axis line direction, and a plurality of partition plates 28 provided in the mixer body 27. The mixer body 27 is manufactured by welding lid bodies 27b and 27c each formed by fabricating a stainless steel sheet into a funnel shape to both ends of the cylinder part 27a formed by fabricating a stainless steel sheet into a cylindrical shape. That is to say, one end part facing to the cylinder part 27a of each of the lid bodies 27b and 27c is formed so as to have an outside diameter equal to that of the cylinder part 27a and is welded to the cylinder part 27a. On the other hand, the other end part of each of the lid bodies 27b and 27c is formed so as to have a diameter corresponding to that of the exhaust pipe 16, and to the outer periphery of the other end part, ring-shaped flange members 27d, 27e for connecting the lid body 27b, 27c to the exhaust pipe 16 are welded. The flange members 27d, 27e are formed with a plurality of mounting holes, and can be screw-mounted to mounted members 16a, 16b provided at the end edge of the exhaust pipe 16 via the mounting holes.

On the other hand, the plurality of partition plates 28 are provided at predetermined intervals in the mixer body 27 so as to obstruct the passage of exhaust gas in the cylinder part 27a. In this embodiment, a case where three partition plates are provided is shown. Each of the three partition plates 28 is formed with a plurality of gas holes 28a, and the three partition plates 28 are provided at predetermined intervals in the mixer body 27. The positions of the plurality of gas holes 28a formed in each of the partition plates 28 are adjusted so as not to overlap the positions of the gas holes 28a formed in the adjacent partition plate 28 in the axis line direction of the cylinder part 27a. The mixer 26 is provided in an intermediate portion between the divided exhaust pipes 16. That is to say, the exhaust pipe 16 is divided at a position near the upstream side of the selective reduction catalyst 21, and the mounted members 16a and 16b are provided at the end edges of the divided exhaust pipes 16. The mixer 26 is inserted into the divided portion, and by screw-mounting the flange members 27d and 27e provided at both ends of the mixer 26 to the mounted members 16a and 16b, respectively, the mixer 26 is provided in the exhaust pipe 16 between the liquid injection nozzle 23 and the selective reduction catalyst 21.

The liquid injection nozzle 23 is connected with a urea-based liquid injecting means 30 capable of injecting the urea-based liquid 32 into the exhaust gas in the exhaust pipe 16 via the injection nozzle 23. The urea-based liquid injecting means 30 has a liquid supply pipe 31 one end of which is connected to the liquid injection nozzle 23, and the other end of the liquid supply pipe 31 is connected to a liquid tank 33 in which the urea-based liquid 32 is stored. Also, the liquid supply pipe 31 is provided with a liquid regulating valve 34 for regulating the quantity of the liquid 32 supplied to the liquid injection nozzle 23, and in the liquid supply pipe 31 between the liquid regulating valve 34 and the liquid tank 33, a pump 36 capable of supplying the liquid 32 in the liquid tank 33 to the liquid injection nozzle 23 is provided. The liquid regulating valve 34 is a three-way valve having first, second and third ports 34a, 34b and 34c. The first port 34a is connected to the discharge opening of the pump 36, the second port 34b is connected to the liquid injection nozzle 23, and the third port 34c is connected to the liquid tank 33 via a return pipe 37. The liquid regulating valve 34 is configured so that when the liquid regulating valve 34 is turned on, the first and second ports 34a and 34b communicate with each other, and when the valve 34 is turned off, the first and third ports 34a and 34c communicate with each other.

On the other hand, in the exhaust pipe 16, a temperature sensor 43 is provided to detect the temperature of exhaust gas in the exhaust pipe 16. The temperature sensor 43 is provided at the inlet of the selective reduction catalyst 21, and is configured so as to detect the temperature of exhaust gas flowing into the selective reduction catalyst 21 as the temperature of the selective reduction catalyst 21. The detection output of the temperature sensor 43 is connected to the control input of a controller 44 consisting of a microcomputer.

Also, to the control input of the controller 44, detection outputs of a rotation sensor 46 for detecting the rotational speed of the engine 11, a load sensor 47 for detecting the load of the engine 11, and the like are connected. In this embodiment, the load sensor 47 detects the displacement of a load lever of a fuel injection device (not shown). The control output of the controller 44 is connected to the liquid regulating valve 34 and the pump 36. The controller 44 has a memory 44a. In the memory 44a, exhaust gas temperature at the inlet of the selective reduction catalyst, on or off of the liquid regulating valve 34 according to engine rotation, engine load, and the like, the degree of opening at the on time, and the operation of the pump 36 are stored in advance. The controller 44 is configured so as to monitor the operating state of the engine 11 based on the detection outputs of the temperature sensor 43, the rotation sensor 46, and the load sensor 47, and to control the liquid regulating valve 34 and the pump 36 according to the conditions stored in the memory 44a from the operating state so that a proper quantity of the urea-based liquid 32 is injected from the injection nozzle 23 according to the operating state.

The exhaust pipe 16 on the upstream side of the injection nozzle 23 is provided with a particulate filter 51. The particulate filter 51 is accommodated in a cylindrical second converter 52 formed by enlarging the diameter of the exhaust pipe 16. The particulate filter 51 is manufactured by carrying an active ingredient having catalytic action on a carrier. The carrier is formed of a porous substance consisting of ceramics such as cordierite and silicon carbide, and has a plurality of through holes partitioned by porous walls, which are formed in parallel with each other. The plurality of through holes have inflow-side through holes 51a the outlet side of which is closed and the inlet side of which is open and outflow-side through holes 51b the inlet side of which is closed and the outlet side of which is open. The inflow-side through holes 51a and the outflow-side through holes 51b are formed alternately in a state of being partitioned by the walls. Also, on the porous wall, the active ingredient is applied and carried. The active ingredient produces oxidative action. As the active ingredient, noble metal based zeolite, noble metal based alumina, or the like is used. The wall is configured so as to have gas permeability in the state in which the active ingredient is carried. The particulate filter 51 is configured so that when exhaust gas flowing into the inflow-side through hole 51a the inlet side of which is open passes through the wall, particulates in exhaust gas are captured. Also, the particulate filter 51 is configured so that the exhaust gas from which particulates have been removed by the passage through the wall flows into the outflow-side through hole 51b the inlet side of which is closed, and is discharged to the outside of the filter 51 from the open outlet side of the outflow-side through hole 51b.

Also, in the exhaust pipe 16 on the exhaust gas upstream side of the particulate filter 51, an oxidation catalyst 53 is provided. This oxidation catalyst 53 is accommodated in the cylindrical second converter 52 formed by enlarging the diameter of the exhaust pipe 16 on the upstream side of the injection nozzle 23 in a state of being arranged just in front of the particulate filter 51. Although not shown, the oxidation catalyst 53 has a monolithic carrier (material: cordierite), not shown, formed with a lattice-shaped (honeycomb-shaped) passage in the direction such that exhaust gas flows, and the monolithic carrier is coated with a platinum-zeolite catalyst or a platinum-alumina catalyst. This coating gives the oxidation catalyst 53 power for oxidizing soot and hydrocarbon (HC etc.).

Further, in the exhaust pipe 16 on the exhaust gas downstream side of the selective reduction catalyst 21, an ammonia purification catalyst 54 is provided. The ammonia purification catalyst 54 is accommodated in the first converter 22 in which the selective reduction catalyst 21 is accommodated in a state of being arranged just in rear of the selective reduction catalyst 21. The ammonia purification catalyst 54 has a monolithic carrier (material: cordierite), not shown, formed with a lattice-shaped (honeycomb-shaped) passage in the direction such that exhaust gas flows, and the monolithic carrier is coated with a platinum-zeolite catalyst or a platinum-alumina catalyst. This coating gives the oxidation catalyst 53 power for oxidizing ammonia.

On the other hand, the diesel engine 11 is driven by burning fuel injected by the fuel injection device, not shown, in a cylinder. The injection device, not shown, in this embodiment has an in-cylinder injector the tip end part of which faces to the cylinder and which can inject light oil, which is a fuel, into the cylinder, a common rail for accumulating light oil under pressure therein and for feeding light oil under pressure to the injector, and a feed pump for supplying light oil to the common rail. The in-cylinder injector is configured so that the injection amount and timing of light oil can be adjusted by an electromagnetic valve incorporated in the injector. This fuel injection device is configured so as to be capable of injecting light oil, which is a fuel, into the cylinder after the top dead center of piston, and is configured so as to be capable of increasing and decreasing hydrocarbon supplied from the engine 11 to the exhaust pipe 16 according to the presence or absence of injection after the top dead center. A specific configuration of the fuel injection device is such that both of after injection for injecting fuel when the crank angle is in the range of 30 to 50 degrees after the top dead center of piston and post injection for injecting fuel when the crank angle is in the range of 90 to 130 degrees after the top dead center of piston. This fuel injection device is connected with the control output of the controller 44, and the configuration is made such that when the temperature sensor 43 detects that the selective reduction catalyst 21 has a temperature not higher than a predetermined temperature, the controller 44 accomplishes both of the after injection and the post injection. Specifically, this predetermined temperature is an upper-limit temperature at which the urea-based liquid does not hydrolyze and moreover the activity in the selective reduction catalyst 21 decreases, and can be set arbitrarily in the range of 100 to 200°C. Although the predetermined temperature is generally set at 170°C, it may be set at 175°C, 180°C, 185°C, 190°C, 195°C or 200°C exceeding the generally set temperature of 170°C. Also, the predetermined temperature may be set at 166°C, 160°C, 155°C, 150°C, 145°C or 140°C lower than the generally set temperature of 170°C. The configuration is made such that the controller 44 controls the fuel injection device so that both of the after injection and the post injection are accomplished when the temperature sensor 43 detects that the selective reduction catalyst has a temperature not higher than the predetermined temperature, for example, 170°C.

The operation of the exhaust gas purification apparatus for an engine configured as described above is explained.
When the engine 11 is started, the exhaust gas goes from the exhaust manifold 14 to the exhaust pipe 16, passing through the oxidation catalyst 53 via the exhaust pipe 16, and reaches the particulate filter 51. The particulates in the exhaust gas of the diesel engine 11 are captured by the diesel particulate filter 51. The exhaust gas the particulates of which have been captured and removed passes through the particulate filter 51 and reaches the selective reduction catalyst 21 after passing through the liquid injection nozzle 23 and the mixer 26.

When the exhaust gas has a temperature at which urea is hydrolyzed, specifically in this embodiment, when the temperature sensor 43 detects an exhaust gas temperature exceeding the predetermined temperature, which is a temperature at which urea is hydrolyzed, for example, 170°C, the controller 44 drives the pump 36 in the liquid injecting means 30. Simultaneously, the controller 44 turns on the liquid regulating valve 34 to cause the first and second ports 34a and 34b in the liquid regulating valve 34 to communicate with each other, so that the urea-based liquid 32 is injected from the liquid injection nozzle 23. The reason for this is that a reducing agent is needed to reduce NOx in exhaust gas by using the selective reduction catalyst 21. The urea-based liquid 32 the concentration of which has been adjusted to a predetermined value is stored in the liquid tank 33. From the operating state of the diesel engine 11, which is determined based on the detection outputs of the rotation sensor 46 and the load sensor 47, the controller 44 estimates the concentration of NOx in exhaust gas, and determines the quantity of urea used as a reducing agent necessary for reducing this NOx, by which a necessary quantity of urea-based liquid 32 is injected from the liquid injection nozzle 23.

The urea-based liquid 32 injected from the liquid injection nozzle 23 flows along the flow of exhaust gas toward the selective reduction catalyst 21, and flows into the mixer 26 provided between the liquid injection nozzle 23 and the selective reduction catalyst 21. The exhaust gas flowing into the mixer 26 passes through the plurality of gas holes 28a formed in the three partition plates 28. Since the plurality of gas holes 28a are formed so as not to overlap the plurality of gas holes 28a formed in the adjacent partition plate 28 in the axis line direction, the exhaust gas passes through the mixer 26 in a zigzag form. Since the exhaust gas goes zigzag, the urea-based liquid 32 injected into the exhaust gas is mixed with the exhaust gas. Therefore, the urea-based liquid 32 having been mixed with the exhaust gas sufficiently at the stage of passing through the mixer 26 reaches the selective reduction catalyst 21 uniformly.

The urea-based liquid 32 uniformly reaching the selective reduction catalyst 21 is heated by exhaust gas and is hydrolyzed by the following chemical reaction to yield ammonia.

(NH₂)₂·CO + H₂O → CO₂ + 2NH₃

This ammonia reduces NO and NO₂ by means of the following chemical reaction to reduce the emission of NOx, and since the urea-based liquid 32 reaches the selective reduction catalyst 21 uniformly, most of the ammonia functions as a reducing agent.

4NO + 4NH₃ + O₂ → 4N₂ + 6H₂O

6NO₂ + 8NH₃ → 7N₂ + 12H₂O

On the other hand, since the ammonia purification catalyst 54 is provided in the exhaust pipe 16 on the exhaust gas downstream side of the selective reduction catalyst 21, the ammonia passing through the selective reduction catalyst 21 without being used as a reducing agent is oxidized by the ammonia purification catalyst 54 and is converted to harmless N₂ and H₂O so that the ammonia is effectively prevented from being discharged to the atmosphere.

On the other hand, when the temperature sensor 43 detects that the selective reduction catalyst 21 has a temperature not higher than the predetermined temperature at which the urea-based liquid does not hydrolyze and moreover the activity in the selective reduction catalyst 21 decreases, for example, 170°C, the controller 44 controls the fuel injection device so that fuel is injected into the cylinder after the top dead center of piston. The case where the predetermined temperature is 170°C is explained concretely. When the temperature sensor 43 detects that the selective reduction catalyst 21 has a temperature not higher than 170°C, the controller 44 controls the fuel injection device so that both of the after injection and the post injection are accomplished. The after injection injects fuel when the crank angle is in the range of 30 to 50 degrees after the top dead center of piston. The after injection can increase hydrocarbon in exhaust gas and burn the hydrocarbon to raise the temperature of exhaust gas flowing out of the engine 11 to the exhaust pipe 16. On the other hand, the post injection injects fuel when the crank angle is in the range of 90 to 130 degrees after the top dead center of piston. The post injection increases hydrocarbon in exhaust gas and supplies the hydrocarbon from the engine 11 to the exhaust pipe 16 together with exhaust gas. Then, the hydrocarbon in exhaust gas is increased, and the increased hydrocarbon undergoes oxidation reaction in the oxidation catalyst 53 provided on the upstream side of the particulate filter 51 to further raise the temperature of exhaust gas. When the temperature of exhaust gas increases, the temperature of the particulate filter 51 is also increased, so that the particulates accumulated in the filter 51 burn. Therefore, when the particulate filter 51 is regenerated as well, the post injection is accomplished.

When oxidation reaction occurs in the oxidation catalyst 53 to increase the temperature of the particulate filter 51, the temperature of exhaust gas passing through the filter 51 increases further, and therefore the temperature of the selective reduction catalyst 21 on the downstream side of the filter 51 increases rapidly to a temperature at which the urea-based liquid is hydrolyzed, so that the ammonia functions as a reducing agent for NOx. Therefore, in the exhaust gas purification apparatus in accordance with the present invention, even when the temperature of exhaust gas is relatively low, NOx in exhaust gas can be removed effectively.

In the above-described embodiment, as the engine, a turbocharged diesel engine is cited. However, the exhaust gas purification apparatus in accordance with the present invention may be used in a naturally-aspirated diesel engine.
Also, in the above-described embodiment, the case where a single oxidation catalyst 53 is provided in the exhaust pipe 16 on the upstream side of the diesel particulate filter 51 has been explained. However, as shown in Figure 2, in the case where the turbocharger 17 is provided on the engine 11, the configuration can be made such that the oxidation catalyst 53 is divided, and a first oxidation catalyst 53a is provided in the exhaust pipe 16 just in rear of the turbocharger 17 and a second oxidation catalyst 53b is further provided in the exhaust pipe 16 just in front of the diesel particulate filter 51. In the exhaust gas purification apparatus for an engine, which is provided with the first and second oxidation catalysts 53a and 53b, since the temperature of exhaust gas increases immediately after the exhaust gas has passed through the turbocharger 17, in the first oxidation catalyst 53a provided in the exhaust pipe 16 just in rear of the turbocharger 17, some of the fuel injected after the top dead center of piston can be burned surely to raise the temperature of exhaust gas. By burning the remaining fuel in the second oxidation catalyst 53b, the temperature of exhaust gas can be raised stepwise to rapidly increase the temperature of the selective reduction catalyst 21.

### INDUSTRIAL APPLICABILITY

The present invention can be applied to an exhaust gas purification apparatus for an engine, which removes nitrogen oxides contained in exhaust gas of a diesel engine to purify the exhaust gas.

## Claims

1. An exhaust gas purification apparatus comprising:
a selective reduction catalyst (21) provided in an exhaust pipe (16) of a diesel engine (11) driven by burning a fuel, which is injected from a fuel injection device, in a cylinder;
a liquid injection nozzle (23) provided in the exhaust pipe (16) on the exhaust gas upstream side of the selective reduction catalyst (21);
a liquid injecting means (30) capable of injecting a urea-based liquid (32) toward the selective reduction catalyst (21) via the liquid injection nozzle (23);
a controller (44) for controlling the liquid injecting means (30); and
a mixer (26) which is provided in the exhaust pipe (16) between the liquid injection nozzle (23) and the selective reduction catalyst (21) and is configured so that the liquid (32) injected from the liquid injection nozzle (23) is mixed with exhaust gas, **characterized in that**
the exhaust gas purification apparatus further comprises:
an ammonia purification catalyst (54) provided in the exhaust pipe (16) on the exhaust gas downstream side of the selective reduction catalyst (21);
a diesel particulate filter (51) provided in the exhaust pipe (16) on the exhaust gas upstream side of the liquid injection nozzle (23);
an oxidation catalyst (53) provided in the exhaust pipe (16) on the exhaust gas upstream side of the diesel particulate filter (51); and
a temperature sensor (43) for detecting the temperature of the selective reduction catalyst (21) and sending the detected temperature to the controller (44).

2. The exhaust gas purification apparatus according to claim 1, wherein
the fuel injection device is configured so as to be capable of injecting the fuel into the cylinder after the top dead center of piston;
the temperature sensor (43) is provided at the inlet of the selective reduction catalyst (21) and is configured so as to be capable of measuring the temperature of exhaust gas flowing into the selective reduction catalyst (21); and
when the temperature sensor (43) detects a temperature not higher than a predetermined temperature, the controller (44) controls the fuel injection device so that the fuel is injected into the cylinder after the top dead center of piston.

3. The exhaust gas purification apparatus according to claim 2, wherein a turbocharger (17) is provided on the engine (11), and the oxidation catalyst (53) consists of a first oxidation catalyst (53a) provided in the exhaust pipe (16) just in rear of the turbocharger (17) and a second oxidation catalyst (53b) provided in the exhaust pipe (16) just in front of the diesel particulate filter (51).

4. The exhaust gas purification apparatus according to claim 2 or 3, wherein
the fuel injection device is configured so as to be capable of accomplishing both of after injection for injecting the fuel when the crank angle is in the range of 30 to 50 degrees after the top dead center of piston and post injection for injecting the fuel when the crank angle is in the range of 90 to 130 degrees after the top dead center of piston; and
when the temperature sensor (43) detects that the selective reduction catalyst (21) has a temperature not higher than the predetermined temperature, the controller (44) controls the fuel injection device so that both of the after injection and the post injection are accomplished.
